Europäisches Patentamt

European Patent Office

Office européen des brevets

(11) Numéro de publication : **0 625 745 A2**

# (12) DEMANDE DE BREVET EUROPEEN

(21) Numéro de dépôt : **94401107.1**

(51) Int. Cl.⁵ : **G06F 7/52**

(22) Date de dépôt : **18.05.94**

(30) Priorité : **19.05.93 FR 9306068**

(43) Date de publication de la demande :
**23.11.94 Bulletin 94/47**

(84) Etats contractants désignés :
**DE GB**

(71) Demandeur : **FRANCE TELECOM**
**6, Place d'Alleray**
**F-75015 Paris (FR)**

(72) Inventeur : **Wittmann, Alain**
**11, Square le Périer**
**F-38400 St. Martin d'Heres (FR)**
Inventeur : **Balestro, Freddy**
**18, boulevard Foch**
**F-38000 Grenoble (FR)**

(74) Mandataire : **Casalonga, Axel**
**BUREAU D.A. CASALONGA - JOSSE**
**Morassistrasse 8**
**D-80469 München (DE)**

(54) **Multiplieur bit-série exempt de débordement interne.**

(57) Le multiplieur, apte à effectuer la multiplication binaire poids faible en tête d'un multiplicande codé sur n bits avec un coefficient multiplicateur, comprend des moyens de traitement (14, 15, 16, 17, 19, 20) aptes pour chaque bit de la partie décimale du coefficient multiplicateur situé entre le bit de poids faible et le bit de poids fort, à calculer effectivement la somme de rang n+1 obtenue à partir des produits partiels dudit bit considéré avec les n bits du multiplicande, et à partir des sommes correspondantes calculées pour le ou les bits précédents du coefficient multiplicateur, de façon à éviter tout débordement interne du multiplieur.

FIG.4

EP 0 625 745 A2

L'invention concerne la multiplication binaire poids faible en tête d'un multiplicande par un coefficient multiplicateur, au sein d'un multiplieur, notamment mais non exclusivement un multiplieur bit-série dans lequel les bits du multiplicande sont présentés en série à l'entrée du multiplieur.

La multiplication binaire poids faible en tête d'un multiplicande par un coefficient multiplicateur comporte la détermination, pour chaque bit du coefficient multiplicateur suivant le bit de poids faible, des sommes obtenues à partir des produits partiels dudit bit considéré avec les n bits du multiplicande, et à partir des sommes correspondantes associées au(x) bit(s) précédent(s) du coefficient multiplicateur.

Ces sommes sont calculées dans des additionneurs qui tiennent compte des retenues découlant de ces opérations. Or, l'homme du métier sait que, d'une façon générale, compte tenu des retenues potentielles, l'addition de deux nombres sur n bits peut donner un nombre sur n+1 bits, ce qui impose donc de tenir compte pour chaque bit considéré du coefficient multiplicateur, de la somme de rang n+1 qui sera utilisée pour le calcul de certaines sommes ultérieures associées aux bits suivants du coefficient multiplicateur.

Par ailleurs, dans les multiplieurs bit-série, on travaille généralement en dynamique constante, c'est-à-dire que, pour un multiplicande de n bits, on ne fournit que n bits à la sortie de chaque additionneur et en sortie du multiplieur.

Une solution consiste alors à ne calculer effectivement que n bit dans chaque additionneur. Mais il faut alors s'assurer que le résultat tient effectivement sur n bits afin d'éviter les problèmes de débordement interne, au niveau des tranches intermédiaires dans le cas d'un multiplieur bit-série, ce qui conduirait à un résultat final erroné.

Une telle solution a été décrite dans l'article de R.F. LYON intitulé "Two's Complement Pipeline Multipliers", et publié dans la revue IEEE Transactions on Communications, Avril 1976, pages 418-425. Cette solution a été mise en oeuvre dans un multiplieur bit-série à duplication du bit de signe des opérandes. En effet, il en résulte de cet article que lorsque l'on duplique le bit de poids fort du multiplicande, qui est le bit de signe lorsque ce nombre binaire est signé dans une arithmétique en complément à 2, les différentes sommes de rang n+1 sont égales aux sommes de rang n calculées, ce qui revient à dire que le résultat de chaque addition tient effectivement sur n bits. En conséquence, on procède alors simplement au sein de chaque tranche intermédiaire de multiplieur, à une duplication de la somme de rang n pour obtenir sans calcul la somme de rang n+1.

Néanmoins, une telle solution nécessite une utilisation d'un bit supplémentaire sur les données, ce qui peut se montrer coûteux dans le cas de filtres fortement multiplexés. Par ailleurs, cette contrainte sur les données rend le comportement du multiplieur difficilement modélisable en cas de débordement interne, dû au non respect de la duplication du bit de poids fort (bit de signe) du multiplicande en entrée du multiplieur, et peut poser des problèmes importants de stabilité dans le cas d'une utilisation de ce multiplieur pour réaliser des filtres récursifs.

L'invention vise à apporter une solution à ce problème.

L'invention a pour but de permettre l'utilisation de données codées en complément à deux sans duplication du bit de signe et de proposer notamment un multiplieur bit-série dont le comportement est entièrement conforme à l'arithmétique en complément à deux.

L'invention a pour objet un procédé pour empêcher un débordement interne d'un multiplieur, connecté sur un milieu de transmission de données, et apte à effectuer la multiplication binaire poids faible en tête d'un multiplicande codé sur n bit avec un coefficient multiplicateur. Selon une caractéristique générale de l'invention, on calcule effectivement dans le multiplieur, pour chaque bit de la partie décimale du coefficient multiplicateur situé entre le bit de poids faible et le bit de poids fort, la somme de rang n+1 obtenue à partir des produits partiels dudit bit considéré avec les n bits du multiplicande, et à partir des sommes correspondantes calculées pour le ou les bits précédents du coefficient multiplicateur.

En d'autres termes, selon l'invention, on ne calcule pas le résultat de chaque addition sur n bits en dupliquant simplement la somme de rang n pour obtenir la somme de rang n+1, mais on calcule le résultat de chaque addition sur n+1 bits en calculant effectivement la somme de rang n+1, de façon à éviter tout débordement interne du multiplieur et de s'affranchir de la duplication du bit de poids fort du multiplicande ce qui économise l'utilisation d'un bit supplémentaire de donnée et évite par conséquent d'augmenter la taille du milieu de transmission de données et des registres d'entrée/sortie. Par ailleurs, quoique particulièrement avantageuse dans le cas des multiplieurs bit-série, l'invention s'applique également dans le cas de multiplieurs bit-parallèle.

Ladite somme de rang n+1 et la somme de rang n sont avantageusement calculées simultanément et, selon un mode de mise en oeuvre de l'invention, ladite somme de rang n+1 est calculée pour chaque bit considéré du coefficient multiplicateur, à partir de la retenue complémentée de rang n, ce qui permet une réalisation très simple et aisée du multiplieur.

L'invention a également pour objet un multiplieur, apte à effectuer la multiplication binaire poids faible en tête d'un multiplicande codé sur n bit avec un coefficient multiplicateur. Selon une caractéristique générale de l'invention, le multiplieur comporte des moyens de traitement aptes, pour chaque bit de la partie décimale du coefficient multiplicateur situé entre le bit de poids faible et le bit de poids fort, à calculer effectivement la somme de rang n+1 obtenue à partir des produits partiels dudit bit considéré avec les n bits du multiplicande, et à partir des sommes correspondantes calculées pour le ou les bits précédents du coefficient multiplicateur, de façon à éviter tout débordement interne du multiplieur.

Dans un mode de réalisation, dans lequel le multiplieur est un multiplieur bit-série comportant une pluralité de tranches de multiplieurs successives reliées en série, chaque tranche étant susceptible de recevoir d'une part un bit prédéterminé du coefficient multiplicateur et d'autre part successivement tous les bits du multiplicande, les moyens de traitement comportent des moyens de traitement élémentaires respectivement incorporés au moins dans les tranches intermédiaires du multiplieur et aptes à calculer respectivement, pour le bit prédéterminé correspondant du coefficient multiplicateur associé à la tranche correspondante, ladite somme de rang n+1.

Selon un mode de réalisation, au moins chaque tranche à partir de la deuxième comporte des moyens de calcul des retenues successives associées aux sommes de rangs successifs et chaque moyen de traitement élémentaire est apte à calculer la somme de rang n+1 correspondante à partir de la retenue complémentée de rang n.

Les moyens de calcul de chaque tranche comprennent avantageusement un additionneur comportant une première entrée apte à recevoir les produits partiels successifs du bit du coefficient multiplicateur associé à ladite tranche avec les bits du multiplicande, et une deuxième entrée pour recevoir les sommes successives délivrées par la tranche précédente. Cet additionneur possède par ailleurs une première sortie de somme apte à délivrer les sommes de rang inférieur ou égal à n. Chaque moyen de traitement élémentaire comprend alors avantageusement ledit additionneur qui comporte une deuxième sortie de somme, apte à délivrer ladite somme de rang n+1, ainsi qu'un duplexeur relié en entrée aux deux sorties de l'additionneur et en sortie à la sortie de la tranche de multiplieur. Ce duplexeur est commandé par un signal de commande dont l'occurrence est liée à celle d'un signal représentatif du début ou de la fin du mot binaire du multiplicande.

Selon une première variante de réalisation, dans laquelle l'additionneur comporte une sortie de retenue rebouclée sur une entrée de retenue par l'intermédiaire d'un circuit de retard de retenue, ladite deuxième sortie de somme est alors la sortie de retenue, avantageusement complémentée de même que la première sortie de somme de cet additionneur.

Selon une autre variante de réalisation de l'invention, dans laquelle l'additionneur comporte également une sortie de retenue rebouclée sur une entrée de retenue par l'intermédiaire d'un circuit de retard de retenue, la deuxième sortie de somme est distincte de la première sortie de somme et de la sortie de retenue. Dans une telle variante, l'additionneur comporte alors six transistors supplémentaires par rapport à un additionneur classique ne comportant qu'une seule sortie de somme et une sortie de retenue, ces transistors supplémentaires étant répartis en trois paires de transistors complémentaires.

Afin de prévoir la multiplication par un coefficient multiplicateur négatif, la dernière tranche de multiplieur comporte un soustracteur avantageusement réalisé à partir d'un additionneur tel que celui utilisé dans la ou les tranches précédentes, mais dont la première sortie de somme n'est pas complémentée et dont la deuxième entrée, recevant les données successives émanant de la tranche précédente, est complémentée.

D'autres avantages et caractéristiques de l'invention apparaîtront à l'examen de la description détaillée de différents modes de réalisation de l'invention, nullement limitatifs, et des dessins annexés sur lesquels :
- la figure 1 représente schématiquement un multiplieur bit-série de l'art antérieur,
- la figure 2 représente plus en détail une tranche du multiplieur de la figure 1,
- la figure 3 représente schématiquement un multiplieur bit-série selon l'invention,
- la figure 4 illustre plus en détail un premier mode de réalisation d'une tranche du multiplieur de la figure 3,
- la figure 5 illustre plus en détail un mode de réalisation de la dernière tranche du multiplieur de la figure 3,
- la figure 6 est une représentation schématique d'une autre partie d'une tranche de multiplieur selon l'invention,
- la figure 7 est une représentation schématique d'un autre mode de réalisation d'une tranche du multiplieur de la figure 3 et,
- la figure 8 illustre plus en détail l'additionneur de la tranche de multiplieur représentée sur la figure 7.

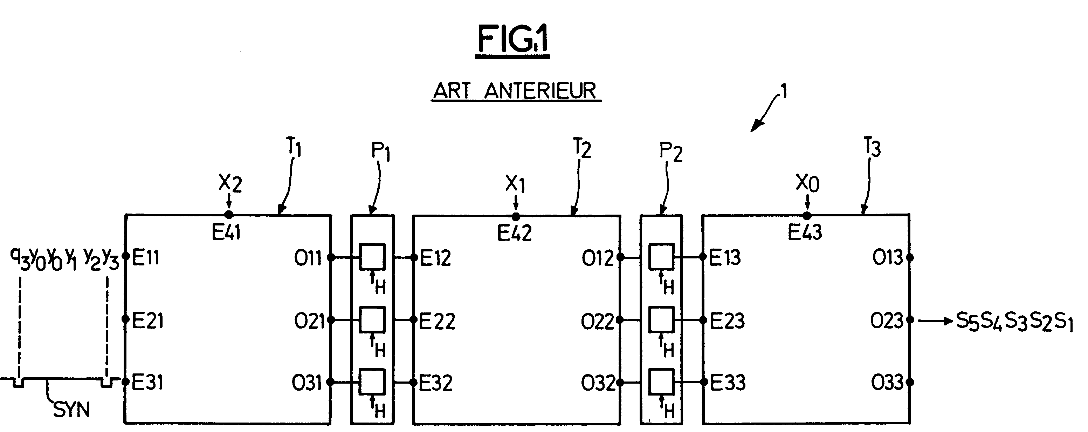

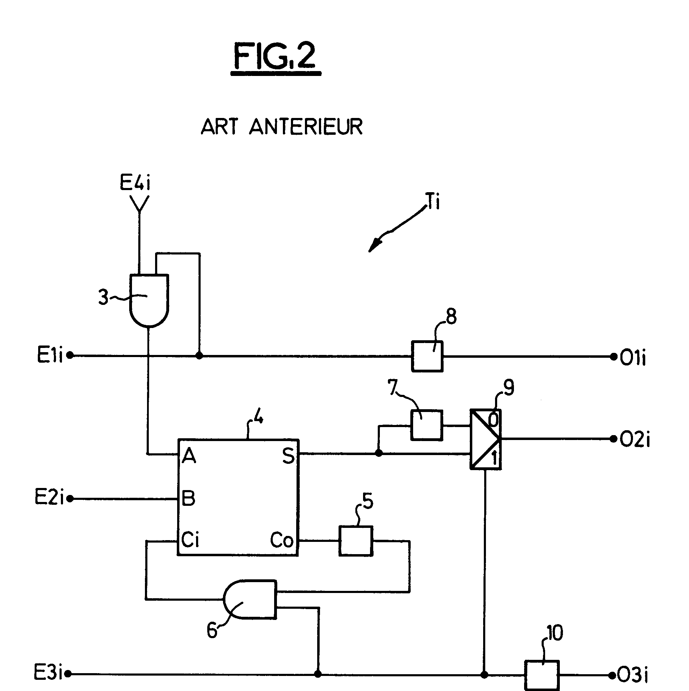

Les figures 1 et 2 illustrent un multiplieur du type de celui décrit dans l'article de LYON précité. Le multiplieur 1 de la figure 1 comporte ici à des fins de simplification trois tranches de multiplieur T1, T2, T3 reliées en série par l'intermédiaire détages de retard P1, P2 comportant des circuits de retard de 1 bit, composés par exemple de bascule D, cadencés par un signal d'horloge H. Ces étages de retard intermédiaires P1, P2... confèrent au multiplieur une architecture dite "pipelinée" bien connue de l'homme du métier.

La première tranche T1 du multiplieur reçoit sur une de ses entrées E11, le multiplicande, de module inférieur à 1 codé sur n bits, ici 4 bits, et dont le bit de poids fort $y_0$ a été dupliqué. Conformément à l'arithmétique en complément à deux, ce bit de poids fort $y_0$ représente le bit de signe. La première tranche T1 du multiplieur reçoit par ailleurs sur une autre entrée E31, dite entrée de synchronisation, un signal SYN représentatif du début du mot binaire du multiplicande. Dans le cas présent, le signal SYN est un mot de synchronisation dont chaque changement d'état d'un bit correspond à l'arrivée du bit de poids faible $y_3$ du multiplicande. Plus précisément, ce mot SYN est composé d'une succession de trains de "1" séparés par des "0" coïncidant avec l'arrivée de chaque bit de poids faible $y_3$, $q_3$ des multiplicandes successifs.

Par ailleurs, chaque tranche du multiplieur reçoit sur une autre entrée E41, E42, E43 un bit d'un coefficient multiplicateur X de module inférieur à 1. La première tranche reçoit le bit de poids faible, ici $x_2$ dans le cas d'un coefficient multiplicateur de trois bits, tandis que la dernière tranche reçoit le bit de poids fort $x_0$.

Le résultat $S_5 S_4 S_3 S_2 S_1$ de la multiplication du multiplicande $y_0 y_0 y_1 y_2 y_3$ par le coefficient multiplicateur $x_0 x_1 x_2$ est délivré en sortie O23 de la dernière tranche T3 du multiplieur.

Une tranche Ti, de ce multiplieur de l'art antérieur est illustrée plus en détail sur la figure 2. Les bits successifs, poids faible en tête, du multiplicande arrivent par l'entrée Eli de la tranche et ressortent par la sortie correspondante Oli après passage dans un circuit de retard 8 de 1 bit cadencé par un signal d'horloge H. Une porte logique ET référencée 3, est connectée en entrée d'une part à l'entrée E4i recevant le bit correspondant du coefficient multiplicateur, et d'autre part, à l'entrée Eli. Cette porte logique 3 réalise donc les produits partiels successifs du bit correspondant du coefficient multiplicateur par les bits successifs du multiplicande. La sortie de cette porte logique 3 est reliée à une première entrée A d'un additionneur 4 dont la deuxième entrée est reliée à l'entrée E2i de la tranche destinée à recevoir les sommes binaires délivrées par l'additionneur de la tranche précédente.

Cet additionneur 4 comprend par ailleurs une sortie de retenue Co rebouclée sur une entrée de retenue Ci par l'intermédiaire d'un circuit de retard 5 dit de "retenue", également de 1 bit, et d'une porte logique ET référencée 6. L'autre entrée de cette porte logique 6 est reliée à l'entrée de synchronisation E3i de la tranche Ti.

La sortie de somme S de l'additionneur, destinée à délivrer la somme des trois entrées A, B et Ci est reliée d'une part à une première entrée d'un duplexeur 9 par l'intermédiaire d'un circuit de retard 7 de 1 bit, et d'autre part directement à l'autre entrée du duplexeur 9. La sortie de ce duplexeur est reliée à la sortie O2i de la tranche Ti. Par ailleurs l'entrée de commande de ce duplexeur 9 est également reliée à l'entrée de synchronisation E3i. Entre la sortie de synchronisation O3i et l'entrée de synchronisation E3i est prévue également un autre circuit de retard dit de "synchronisation", de 1 bit, et référencé 10.

Bien que l'additionneur 4 ne soit pas indispensable pour la première tranche T 1 du multiplieur, puisqu'il reçoit en général la valeur 0 sur l'entrée E21, il est cependant présent dans cette tranche. Par ailleurs, l'homme du métier sait que dans le cas où le coefficient multiplicateur est négatif, il convient de remplacer l'additionneur 4 de la dernière tranche T3 par un soustracteur. En outre, dans cette dernière tranche la bascule 7 et le duplexeur 9 sont omis.

On va maintenant décrire le fonctionnement de ce multiplieur de l'art antérieur. L'homme du métier sait que l'addition de deux nombres binaires A et B, codés sur n bits, peut fournir un résultat S sur n+1 bits compte tenu de la retenue R (voir (I) en annexe). Chaque additionneur 4, recevant en entrée $a_i$, $b_i$ et la retenue $R_i$ délivre sur sa sortie de somme S la somme $S_i$ (voir (II) en annexe) et sur sa sortie de retenue Co, la retenue $R_{i+1}$. Par ailleurs la somme de rang n+1, référencée $S_{n+1}$, et généralement une fonction de $a_n$, $b_n$ et de la retenue $R_{n+1}$ (voir (III) en annexe), doit être prise en compte pour les opérations effectuées dans les additionneurs des tranches suivantes.

Examinons maintenant le déroulement de la multiplication du multiplicande Y, (codé sur cinq bits $y_0 y_0 y_1 y_2 y_3$, dont le bit de poids fort, ou bit de signe, $y_0$ a été dupliqué), par le coefficient multiplicateur X (codé sur trois bits $x_0 x_1 x_2$), $y_3$ et $x_2$ étant respectivement les bits de poids faible des nombres Y et X (voir (IV) en annexe). Au début de la multiplication avec le premier multiplicande, tous les registres (circuits de retard) sont à zéro. L'additionneur 4 de la première tranche T1 va successivement, puisque l'entrée B est à zéro, délivrer les produits partiels successifs du bit de poids faible $x_2$ du coefficient multiplicateur X par les cinq bits du multiplicande Y. En fait, puisque l'arrivée du bit de poids faible $y_3$ du multiplicande coïncide avec le bit "0" du mot de synchronisation SYN, le produit partiel $x_2 y_3$ n'est pas délivré à la sortie O21 de cette première tranche. Ce produit partiel a néanmoins été représenté entre parenthèses au point (IV) de l'annexe pour une meilleure compréhension. En effet, c'est le contenu de la bascule 7, dont on reviendra plus en détail ci-après sur la signification, qui est délivré en sortie 021 de la première tranche par l'intermédiaire du duplexeur 9.

Les produits partiels successifs $x_2 y_2$, $x_2 y_1$, $x_2 y_0$ et $x_2 y_0$ sont ensuite successivement délivrés en sortie S de l'additionneur par l'intermédiaire de la deuxième voie du duplexeur 9 puisque le signal de synchronisation a la valeur 1. Par ailleurs, puisque la deuxième entrée de la porte logique 6 est à 1 les différentes retenues sont réinjectées à l'entrée Ci de l'additionneur, avec un coup d'horloge de retard.

Lorsque le bit de poids faible $q_3$ du multiplicande suivant se présente à l'entrée E11 de la première tranche, le signal de synchronisation SYN passe à "0" ce qui a pour effet de commuter le duplexeur 9 sur sa première voie et de délivrer en sortie O21 la contenu du registre 7 qui correspond au dernier produit partiel $x_2y_0$ calculé. On réalise donc ainsi une duplication du bit de poids fort ou bit de signe $x_2y_0$ du mot binaire délivré par l'additionneur 4. Par ailleurs, l'opération élémentaire d'addition effectuée par l'additionneur 4 et concernant le bit de poids faible $q_3$ du multiplicande suivant, n'est pas perturbée par une retenue provenant d'une opération effectuée avec le multiplicande précédent Y puisque, simultanément à l'arrivée du bit de poids faible $q_3$, la deuxième entrée de la porte logique 6 est mise à "0" ce qui empêche la réinjection à l'entrée de retenue Ci, de la retenue préalablement stockée dans le circuit de retard de retenue, ou registre, 5.

Dans la tranche de multiplieur suivante T2, la porte logique 3 effectue successivement les produits partiels du bit $x_1$ du coefficient multiplicateur avec les n bits (ici 5) du multiplicande, à savoir les produits partiels $x_1y_3$, $x_1y_2$, $x_1y_1$, $x_1y_0$ et $x_1y_0$. L'additionneur 4 de la tranche T2 va calculer effectivement et délivrer n (ici 5) sommes de rangs 1 à n obtenues à partir des produits partiels du bit considéré (ici le bit $x_1$) du coefficient multiplicateur avec les n bits du multiplicande et à partir des produits partiels correspondants calculés pour le bit précédent (ici le bit de poids faible $x_2$). Plus précisément, l'additionneur 4 délivre la somme de rang 1, $s_1$, égale à $x_1y_3 + x_2y_2$, la somme de rang 2, $s_2$, égale à $x_1y_2 + x_2y_1$, la somme de rang 3, $s_3$, égale à $x_1y_1 + x_2y_0$, la somme de rang 4, $S_4$ égale à $x_1y_0 + x_2y_0$, et la somme de rang 5, $s_5$, égale $x_1y_0 + x_2y_0$.

En fait, par analogie au fonctionnement de la tranche T1, la somme de rang 1, $s_1$, n'est pas délivrée en sortie O22 de cette tranche $T_2$ puisque elle coïncide avec l'apparition du bit "0" du signal de synchronisation ce qui a pour effet de délivrer, en sortie O22, le contenu du registre 7 qui correspond à la somme de rang n+1 associée au multiplicande précédent.

L'homme du métier remarque que la somme de rang n(ici la somme de rang 5, $s_5$) est simultanément délivrée en sortie O22 de cette tranche T2 et stockée dans le registre 7. Lors de l'apparition du bit "0" du signal de synchronisation coïncidant avec l'arrivée du bit de poids faible $q_3$ du multiplicande suivant, la somme de rang $s_5$ est à nouveau délivrée en sortie O22 de cette tranche T2 et correspond alors à la somme de rang n+1. Simultanément à cette délivrance de la somme de rang n+1, le calcul dans cette deuxième tranche avec le bit de poids faible $q_3$ du multiplicande suivant est effectué et n'est pas affecté par la retenue préalablement stockée dans le registre 5 en raison de la mise à "0" de la deuxième entrée de la porte logique 6.

L'homme du métier remarque donc ici que dans ce multiplieur de l'art antérieur, l'addition, au niveau de l'additionneur d'une tranche, s'effectue sur n bits (en l'espèce 5). Les sommes de rangs 1 à 5 sont effectivement calculées. Néanmoins, il est nécessaire d'utiliser la somme de rang n+1 dans l'additionneur de la tranche suivante. Cependant, cette somme de rang n+1 n'est pas ici effectivement calculée. Elle correspond en fait à la somme de rang n qui est simplement dupliquée par l'intermédiaire du duplexeur 9 et du registre 7. L'obtention de la somme de rang n+1 par duplication de la somme de rang n conduit ici à un résultat exact en raison de la duplication du bit de signe $y_0$ du multiplicande.

Le fonctionnement qui vient d'être décrit ici pour la deuxième tranche T2 est identique à celui des tranches suivantes. En ce qui concerne la dernière tranche (ici la tranche T3), le dernier additionneur , ou soustracteur, calcule les sommes $S_1$ à $S_5$ de rangs 1 à 5 obtenues à partir des produits partiels du bit de poids fort du coefficient multiplicateur avec les n bits du multiplicande, et à partir des sommes successives $s_2$, $s_3$ $s_4$ $s_5$ et $s_5$ associées au bit précédent.

La somme de rang $S_1$ est ici délivrée par l'additionneur de la tranche T3, contrairement à la somme $s_1$ et au produit partiel $x_2y_3$, puisque le duplexeur 9 et la bascule 7 ont été retirés. Il est en effet inutile de dupliquer ici à nouveau le bit de signe $S_5$ puisque l'on est en fin de calcul, et la sortie d'un bit supplémentaire $S_1$ (en l'occurrence le bit de poids faible) permet de conserver la précision. Le résultat final de la multiplication est donc un mot binaire codé sur 5 bits $S_5$ $S_4$ $S_3$ $S_2$ $S_1$. $S_3$ $S_2$ $S_1$ représentent les bits de "données" du résultat tandis que $S_5$ et $S_4$, égaux, représentent le bit de signe dupliqué.

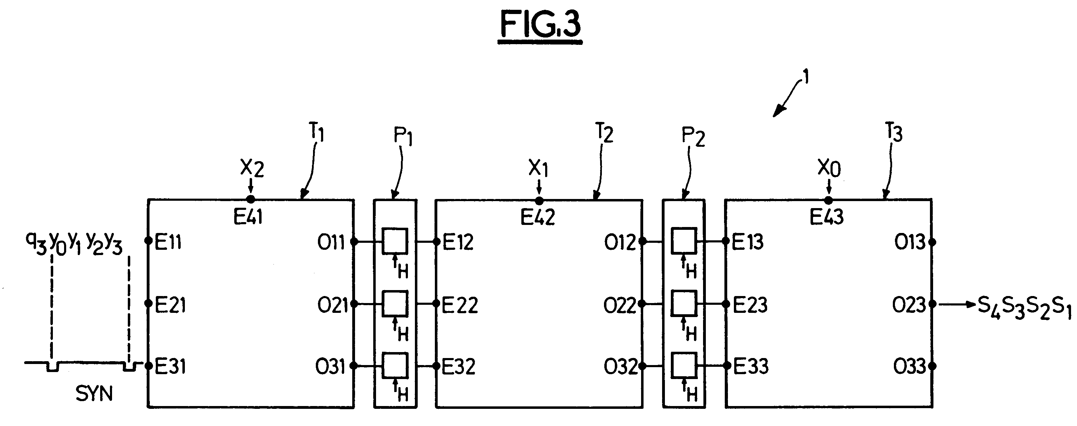

Le multiplieur selon l'invention, avantageusement câblé c'est-à-dire réalisé à partir d'éléments discrets implantés sur un circuit intégré, illustré très schématiquement sur la figure 3 et référencé 11, permet de s'affranchir de la duplication du bit de signe $y_0$ du multiplicande en entrée E11 de la première tranche du multiplieur. On réalise ainsi l'économie d'un bit sur les données ce qui permet de travailler avec des registres de taille moins importante que ceux utilisés avec un multiplieur de l'art antérieur. A des fins de simplification, on a repris sur la figure 3 les mêmes références pour les blocs généraux du multiplieur. Chaque multiplicande, en l'espèce par exemple le multiplicande Y, est codé sur quatre bits, y compris le bit de signe, et le résultat correspondant $S_4$ $S_3$ $S_2$ $S_1$ est également codé sur quatre bits y compris le bit de signe $S_4$. Le signal de synchronisation SYN est cette fois-ci une succession d'un trains de "1" séparés par des "0" en coïncidence avec les bits de poids fort, en l'espèce $y_0$, des multiplicandes successifs. En d'autres termes, ce signal de synchronisation délimite ici la fin du mot binaire du multiplicande.

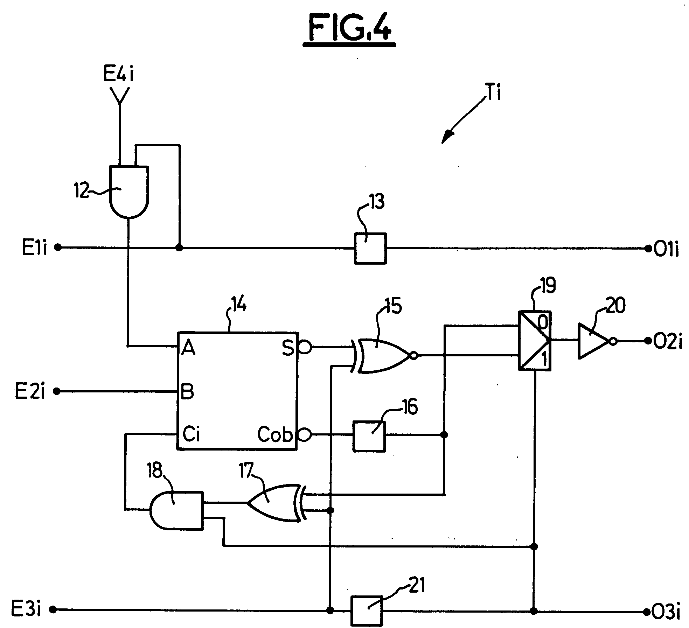

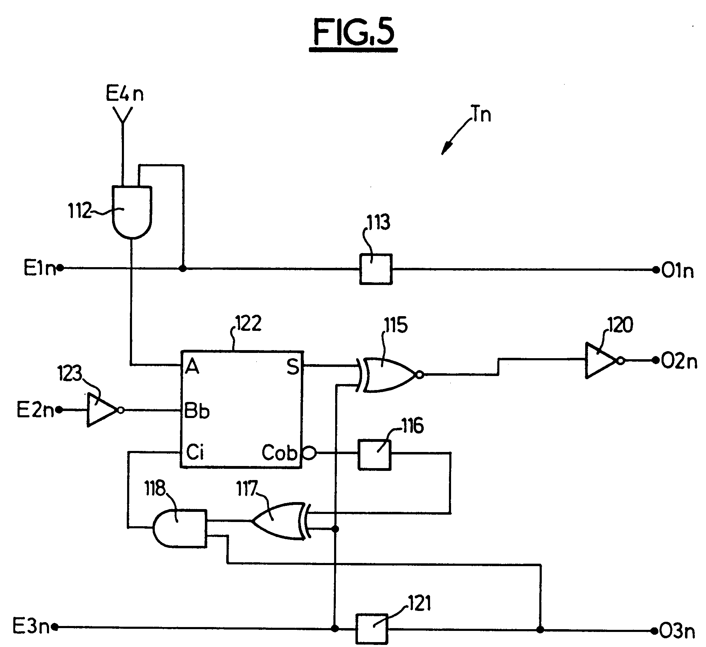

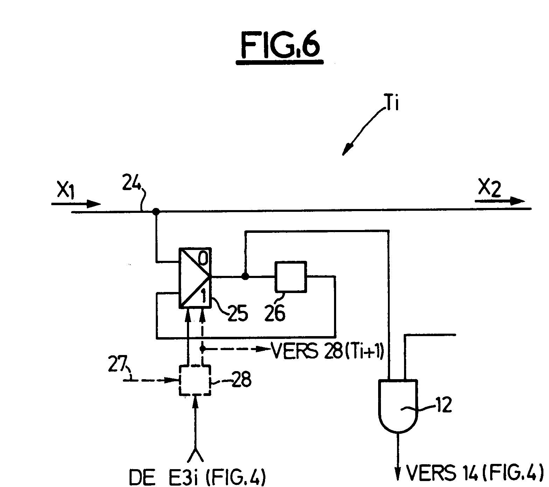

Une tranche intermédiaire de multiplieur Ti du multiplieur 11 de la figure 3 est illustrée plus en détail sur la figure 4. Le circuit de retard, ou registre, 13 disposé entre l'entrée Eli et la sortie Oli des bits successifs du multiplicande, est analogue au registre 8 de la figure 2. Il en est de même du circuit de retard de synchronisation 21, par rapport au registre homologue 10 de la figure 2, et du circuit de retard de retenue 16 par rapport au registre homologue 5 de cette figure 2. De même, la porte logique ET référencée 12 est analogue à la porte logique 3 du multiplieur de la figure 2.

L'additionneur 14 de la tranche Ti du multiplieur selon l'invention est modifié au niveau de sa sortie de somme et de sa sortie de retenue en ce sens que ces deux sorties, respectivement référencées Sb et Cob, sont complémentées. Une telle modification peut résulter simplement par l'adjonction d'un inverseur au niveau des sorties de somme et de retenue d'un additionneur classique. Concrètement, conformément à la formule (V) en annexe, la sortie Sb correspond à la somme complémentée des trois entrées A, B et Ci et délivre la somme complémentée de rang i lorsque les bits $a_i$, $b_i$ et $R_i$ sont présents aux entrées A, B et Ci. De même simultanément à la délivrance de la somme complémentée de rang i est délivrée la retenue complémentée de rang i+1, à la sortie Cob.

La sortie de somme Sb de l'additionneur 14 est reliée à une entrée d'une porte logique NON OU EXCLUSIF, référencée 15, dont la sortie est reliée à l'une des entrée d'un duplexeur 19. L'autre entrée de cette porte logique 15 est reliée à l'entrée de synchronisation E3i de la tranche Ti, et donc en amont du circuit de retard de synchronisation 21. La sortie du circuit de retard de retenue 16, dont l'entrée est reliée à la sortie de retenue complémentée Cob de l'additionneur 14, est reliée d'une part à l'autre entrée du duplexeur 19, et d'autre part à une première entrée d'une porte logique OU EXCLUSIF référencée 17. La deuxième entrée de cette porte logique 17 est également reliée à l'entrée de synchronisation E3i. La sortie de cette porte logique 17 est reliée à une entrée d'une porte logique ET, référencée 18, dont la sortie est reliée à l'entrée de retenue Ci de l'additionneur 14. L'autre entrée de cette porte logique 18 est reliée à la sortie de synchronisation O3i, donc à la sortie du circuit de retard de synchronisation 21. L'entrée de commande du duplexeur 19 est également reliée en aval du circuit de retard de synchronisation 21.

Par ailleurs, la sortie du duplexeur 19 est ici reliée à la sortie O2i de la tranche Ti par l'intermédiaire d'un inverseur 20.

Comme expliqué plus en détail ci-après, afin notamment de ne pas pénaliser la précision du calcul final, la dernière tranche de multiplieur ne comporte pas de duplexeur 19. La sortie de la porte logique 15 est alors directement reliée à la sortie 02 par l'intermédiaire de l'inverseur 20. Bien entendu on pourrait également dans ce cas remplacer l'ensemble "porte logique 15 - inverseur 20" par une porte logique équivalente.

Examinons maintenant le fonctionnement de ce multiplieur sur une multiplication d'un multiplicande Y codé sur quatre bits $y_0$ $y_1$ $y_2$ $y_3$, ou $y_3$ est le bit de poids faible et $y_0$ le bit de signe, par un coefficient multiplicateur X codé sur trois bits $x_0$ $x_1$ $x_2$ avec $x_2$ étant le bit de poids faible. Y et X sont ici de module inférieur à 1.

A des fins de simplification, on se réfère également au point (VI) de l'annexe et au fonctionnement d'une tranche intermédiaire Ti du multiplieur, par exemple la deuxième tranche.

La porte logique 12 effectue successivement les produits partiels $x_1y_3$, $x_1y_2$, $x_1y_1$ et $x_1y_0$ du bit $x_1$ du coefficient multiplicateur avec les n (ici 4) bits du multiplicande. La sortie de somme de l'additionneur 14 va donc successivement délivrer les sommes de rang 1, $s_1$, de rang 2, $s_2$, de rang 3, $s_3$ et de rang 4, $S_4$ telles que définies au point VI de l'annexe. En ce qui concerne le calcul des sommes $s_2$ et $s_3$, le signal de synchronisation présent à l'entrée E3i est égal à 1 de même que le signal de commande du duplexeur 19. En conséquence, la porte logique 17, ayant la valeur 1 à l'une de ses entrées, se comporte comme un inverseur tandis que la porte logique 15 transmet sans modification la valeur délivrée par la sortie Sb de l'additionneur 14. Par ailleurs, puisque la deuxième entrée de la porte logique 18 est également 1, la retenue complémentée délivrée par la sortie Cob de l'additionneur peut être réinjectée, après passage dans le registre de retard 16, à l'entrée de retenue Ci. En fait, puisque la porte logique 17 se comporte comme un inverseur, c'est bien une retenue non complémentée qui est réinjectée à l'entrée de retenue Ci de l'additionneur 14. En conséquence, la somme de rang 2 ou 3 est délivrée complémentée en sortie Sb de l'additionneur mais est en fait délivrée non complémentée en sortie O2i de la tranche de multiplieur par l'intermédiaire de la deuxième voie du duplexeur 19 et de l'inverseur 20.

Lors du calcul du produit partiel $x_1y_3$ et de la somme de rang 1, $s_1$, le signal de synchronisation est à 1 en amont du circuit de retard de synchronisation 21 mais à 0 en aval de ce circuit 21 puisque l'arrivée dans la tranche Ti du bit de poids faible du multiplicande suit en fait le bit de poids fort du multiplicande précédent. Aussi, puisque le duplexeur 19, sous l'action du signal de commande à l'état zéro, est commuté sur sa voie du haut, c'est le contenu du registre de retard de retenue 16 qui est délivrée en sorte de ce duplexeur et non la somme $s_1$. Néanmoins, le calcul de cette somme de rang 1 n'est pas perturbé par le contenu du registre de retenue 16 qui contenait la retenue du calcul précédent concernant le dernier bit du multiplicande précédent en raison de la valeur 0 affectée à la deuxième entrée de la porte logique 18.

Lors de l'arrivée du bit de poids fort, ou bit de signe, $y_0$ du multiplicande Y, le signal de synchronisation passe à 0 en amont du circuit de retard de synchronisation 21, alors qu'il est toujours à la valeur 1 en aval de ce circuit 21. La porte logique 15 se comporte alors comme un inverseur tandis que la porte logique 17 permet la transmission sans modification du contenu du registre de retenue 16.

Au cours de ce calcul, l'additionneur 14 va effectivement calculer simultanément la somme de rang n (ici la somme de rang 4, $S_4$), et la somme de rang n+1 (ici la somme de rang 5, $s_5$). En effet, la demanderesse a observé que, alors que la retenue de rang n+1, $R_{n+1}$, est le résultat de la fonction majorité des trois bits $a_n$, $b_n$ et $R_n$ présents respectivement aux trois entrées A, B et Ci de l'additionneur 14, la somme $S_{n+1}$ de rang n+1 est égale à la fonction majorité des trois bits $a_n$, $b_n$, et de la retenue complémentée de rang n, $\overline{R_n}$ (formules VII et VIII en annexe). Par ailleurs, le résultat de la fonction majorité est obtenue en sortie de retenue d'un additionneur.

Aussi, pour le calcul de la somme $s_4$ de rang 4, c'est-à-dire lorsque le produit partiel $x_1y_0$ est présent à l'entrée A et le produit partiel $x_2y_0$ est présent à l'entrée B, c'est en fait le contenu non complémenté du registre de retenue 16 qui est présent à l'entrée de retenue Ci de l'additionneur 14, c'est-à-dire la retenue complémentée de rang 4, $R_4$. En conséquence, la sortie de somme complémentée Sb de l'additionneur 14 délivre effectivement la somme $s_4$ de rang 4 qui est complémentée une première fois au passage de la porte logique 15 puis complémentée une deuxième fois après passage dans l'inverseur 20 pour être délivrée en sortie O2i de la tranche Ti.

Simultanément au calcul de cette somme $s_4$, l'additionneur calcule effectivement la somme de rang n+1, ici la somme $s_5$, et la délivre complémentée en sortie Cob de l'additionneur 14 pour y être stockée dans le registre de retard de retenue 16. Cette sortie de rang n+1 sera délivrée non complémentée, au coup d'horloge suivant, c'est-à-dire à l'arrivée du bit de poids faible du multiplicande suivant, par l'intermédiaire de l'autre voie du duplexeur 19 commandé par le signal de synchronisation égal alors à 0 en aval du circuit de retard de synchronisation 21, et par l'intermédiaire de l'inverseur 20.

L'homme du métier remarque donc que l'on calcule effectivement au niveau de l'additionneur 14 de la tranche intermédiaire de multiplieur Ti la somme de rang n+1 (en l'espèce la somme de rang 5, $s_5$). En d'autres termes, l'addition s'effectue sur n+1 bit (en l'espèce 5 bits) pour un multiplicande codé et signé sur 4 bits, contrairement au multiplieur de l'art antérieur dans lequel l'addition s'effectuait effectivement sur n bits avec duplication du nième bit pour obtenir la somme de rang n+1. Par ailleurs, alors que dans le multiplieur de l'art antérieur, cette duplication s'effectuait à partir du signal extrait de la sortie de somme de l'additionneur, le calcul dans le multiplieur selon l'invention, de la somme de rang n+1, s'effectue à partir du signal tiré de la sortie de retenue de cet additionneur. Enfin, on remarquera que le calcul de la somme de rang n+1, effectué à partir de la retenue complémentée de rang n, s'effectue simultanément avec celui de la somme de rang n.

Le résultat final de la multiplication, $S_4 S_3 S_2 S_1$, disponible en sortie de la dernière tranche du multiplieur, est donc codé sur 4 bits avec le bit $S_4$ comme bit de signe. Les deux bits $x_2y_3$, $s_1$ qui ont été représentés entre parenthèse au point (VI) de l'annexe, ne sont pas délivrés par le multiplieur comme expliqué précédemment en raison du duplexeur de chaque tranche, cette suppression ne perturbant pas le résultat final en raison notamment de la porte logique ET connectée entre la sortie et l'entrée de retenue de chaque additionneur.

En raison de la suppression du duplexeur de la dernière tranche, le bit $S_1$ est effectivement délivré en sortie du multiplieur afin de conserver la précision de 3 bits sur le résultat, tandis que la somme de rang n+1, $S_5$, n'est pas délivrée, ce qui n'a aucune incidence sur le résultat puisque d'une part tout débordement interne a été évité dans les tranches intermédiaires, et que d'autre part on se situe en fin de calcul avec un résultat de module inférieur à 1 dans lequel, en conséquence, $S_4$ représente le bit de signe.

En ce qui concerne la première tranche T1 de ce multiplieur, la somme de rang "5", égale simplement ici au produit partiel $x_2y_0$, est calculée de la même façon que celle expliquée précédemment. Néanmoins, l'homme du métier comprendra que cette "somme" revient dans le cas de la première tranche à une duplication du bit de signe $x_2y_0$. Aussi, il n'est pas réellement indispensable de prévoir pour la première tranche du multiplieur une architecture comparable aux tranches suivantes. On pourrait éventuellement utiliser une architecture comparable à celle du multiplieur de l'art antérieur afin d'effectuer une simple duplication du bit de signe.

Comme expliqué précédemment, dans le cas où le coefficient multiplicateur est négatif, il convient que la dernière tranche de multiplieur comporte un soustracteur au lieu d'un additionneur. Une telle tranche Tn est illustrée sur la figure 5 sur laquelle les éléments analogues ayant des fonctions analogues à ceux représentés sur la figure 4 ont des références augmentées de 100 par rapport à celles qu'ils avaient sur cette figure 4. Seules les différences entre ces deux figures seront maintenant décrites.

Le soustracteur 122 est réalisé de façon très simple (par application de la formule générale (IX) de soustraction de deux nombres U et V) à partir de l'additionneur 14 d'une tranche précédente en ne complémentant pas la sortie de somme S de cette cellule 122 et en complémentant par contre la deuxième entrée B de cette cellule 122, c'est-à-dire l'entrée recevant les sommes successives délivrées par la tranche précédente. Cette complémentation de cette deuxième entrée Bb peut être réalisée en plaçant un inverseur 123 entre l'entrée E2n et la cellule 122. Par ailleurs, comme expliqué ci-avant, le duplexeur a été omis et le retard 116 est simplement rebouclé sur l'entrée de retenue par les portes 117 et 118.

Afin de permettre l'alimentation du multiplieur par les bits du coefficient multiplicateur véhiculés en série, il est prévu que chaque tranche Ti de multiplieur comporte avantageusement les moyens illustrés sur la figure 6.

Ces moyens comportent un duplexeur 25 dont une entrée est reliée au bus série 24 véhiculant les bits $x_0$ $x_1$ $x_2$ du coefficient multiplicateur. La sortie de ce duplexeur 25 est rebouclée par l'intermédiaire d'un circuit de retard 26 de 1 bit, tel qu'une bascule D, sur la deuxième entrée du duplexeur 25. La sortie du duplexeur 25, c'est-à-dire l'entrée du circuit 26 est par ailleurs reliée à l'une des entrées de la porte logique ET référencée 12. L'entrée de commande du duplexeur 25 est reliée à l'entrée de synchronisation E3i de la tranche Ti.

Si l'on suppose par exemple que les moyens illustrés sur la figure 6 sont affectés à la deuxième tranche T2 du multiplieur associée au bit $x_1$ du coefficient multiplicateur, on voit alors que, en présence d'un bit de valeur 0 du signal de synchronisation SYN, coïncidant avec l'arrivée du bit $x_1$ du coefficient multiplicateur, ce dernier est, par l'intermédiaire du duplexeur 25 injecté à l'entrée de la porte logique 12 afin de réaliser le premier produit partiel de ce bit $x_1$ avec le bit de poids faible du multiplicande. Ce bit $x_1$ reste par ailleurs dans la boucle du duplexeur par l'intermédiaire du registre 26 pour les calculs des produits partiels suivants jusqu'au chargement d'un bit $x_1$ d'un nouveau coefficient multiplicateur, ou du même, arrivant sur le bus 24, lors de l'occurrence du bit suivant de valeur 0 du signal de synchronisation. Bien entendu, l'homme du métier aura compris que dans cette variante, il est nécessaire de compléter le mot binaire du coefficient multiplicateur afin que ce mot binaire soit de même longueur que celui du multiplicande, et ce afin d'être certain d'effectuer les bons produits partiels dans les bonnes tranches.

Néanmoins, de tels moyens de chargement des bits du coefficient multiplicateur permettent, moyennant l'utilisation d'un autre signal de synchronisation 27 et d'un retard 28 recevant ce signal de synchronisation 27 et le délivrant en sortie d'une part à l'entrée de commande du duplexeur 25 et d'autre part à l'entrée du retard 28 de la tranche suivante, de ne charger qu'une seule fois les bits du coefficient multiplicateur, sans qu'il soit d'ailleurs nécessaire de compléter le mot binaire du coefficient multiplicateur. En effet, on peut aisément prévoir que le signal de synchronisation 27 soit utilisé une seule fois pour charger, une fois pour toutes, le bit $x_1$ dans le circuit de retard 26, et que le signal de synchronisation issu de l'entrée de synchronisation de la tranche, soit utilisé pour cadencer la tranche du multiplieur (et non plus pour commander le duplexeur 25) en vue du calcul des produits partiels correspondants. A cet égard, le signal 27 peut être un signal de synchronisation distinct mais "calqué" sur celui issu de l'entrée de synchronisation et utilisable une seule fois ou bien le signal issu de l'entrée de synchronisation utilisable une seule fois à un moment approprié pour commander le duplexeur 25.

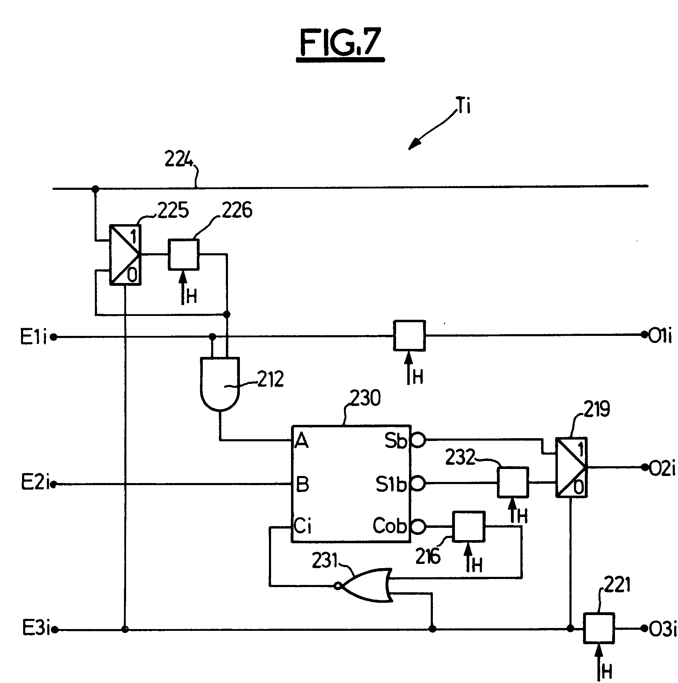

Il est possible selon l'invention d'utiliser, en variante, pour chaque tranche de multiplieur Ti comportant un additionneur, le mode de réalisation illustré sur la figure 7. Sur cette figure, les éléments analogues ou ayant des fonctions analogues à ceux représentés sur les figures 4 et 6 ont des références augmentées de 200 par rapport à celles qu'ils avaient sur ces figures. Seules les différences entre les figures 4 et 6 d'une part et la figure 7 d'autre part seront maintenant décrites.

Dans cette variante de réalisation, l'additionneur 230 comporte, outre les trois entrées A, B et Ci, et la sortie de retenue complémentée COb, une première sortie de somme Sb, analogue à la sortie de somme de l'additionneur 14 de la figure 4, destinée à délivrer les sommes de rang 1 à n, et une deuxième sortie de somme S1b, complémentée, destinée à délivrer la somme de rang n+1.

La première sortie de somme Sb est reliée directement à une première entrée du duplexeur 219 tandis que la deuxième sortie de somme S1b est reliée à l'autre entrée du duplexeur par l'intermédiaire d'un retard auxiliaire 232. La sortie du duplexeur 219 est directement reliée à la sortie O2i de la tranche.

Par ailleurs, la porte ET 18 de la figure 4 est remplacée ici par une porte logique NON OU 231 dont une entrée est reliée à la sortie du retard de retenue 216 et dont l'autre entrée est reliée à l'entrée de synchronisation E3i en amont du retard de synchronisation 221. Par ailleurs, l'entrée de commande du duplexeur 219 est également relié en amont du retard 221.

En ce qui concerne la porte logique ET 212 destinée à effectuer les produits partiels successifs, l'une de ses entrées est reliée à la sortie du circuit de retard 226 recevant le bit correspondant du coefficient multiplicateur, et non plus en entrée de ce circuit de retard comme sur la figure 6.

Moyennant un signal de synchronisation composé cette fois-ci d'une succession de trains de "0" espacés de "1" en coïncidence avec les bits de poids faible des multiplicandes successifs, le fonctionnement d'une telle tranche de multiplieur est analogue à celui décrit précédemment en référence aux figures 4 et 6.

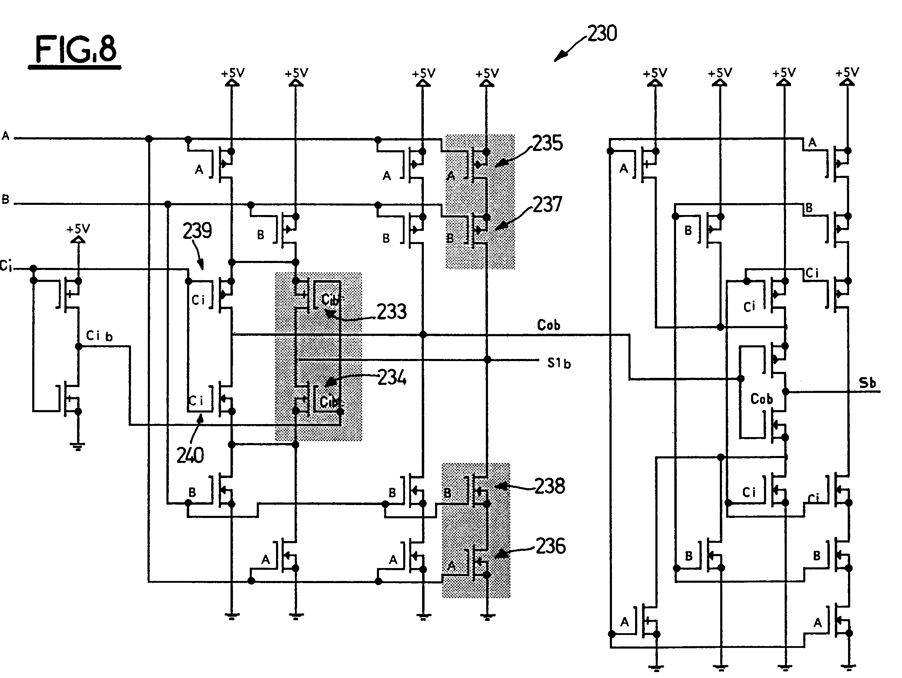

Cette variante de réalisation permet l'économie des portes logiques OU EXCLUSIF 17 et NON OU EXCLUSIF 15 de la figure 4 et cet additionneur 230 peut être réalisé simplement à partir d'un additionneur classique ne comportant qu'une sortie de somme et une sortie de retenue, moyennant l'implantation de six transistors supplémentaires seulement, comme illustré plus en détail sur la figure 8.

Les zones en grisé sur cette figure concernent les six transistors supplémentaires rajoutés.

Ces transistors supplémentaires sont répartis en trois paires auxiliaires de transistors complémentaires. La première paire auxiliaire de transistors à effet de champ 233, 234, est connectée en parallèle aux bornes d'une première paire de transistors complémentaires 239, 240 dont les grilles sont reliées à l'entrée de retenue Ci, et dont les sources communes sont reliées à la sortie de retenue complémentée Cob. Les sources communes des deux transistors 233 et 234 de cette première paire auxiliaire sont reliées à la deuxième sortie de somme complémentée S1b.

Les grilles des transistors complémentaires 235 et 236 de la deuxième paire auxiliaire sont reliées à une première entrée de l'additionneur, en l'espèce l'entrée A, tandis que les grilles des transistors complémentaires 237 et 238 de la troisième paire auxiliaire sont reliées à la deuxième entrée de l'additionneur, en l'espèce l'entrée B.

La source de chaque transistor 235 (236) de la deuxième paire est connectée au drain du transistor homologue 237 (238) de la troisième paire auxiliaire, et les sources des transistors 237, 238 de la troisième paire auxiliaire sont reliées ensemble à la deuxième sortie de somme complémentée S1b.

Enfin, le drain du transistor 235 de la deuxième paire auxiliaire est relié à l'alimentation de l'additionneur tandis que le drain du transistor complémentaire 236 de cette paire est relié à la masse.

**A n n e x e**

$$
\text{(I)} \quad \left[
\begin{array}{l}
R : \qquad R_n \; R_{n-1} \; \dots\dots\dots\dots R_i \dots\dots\dots\dots R_2 \\[4pt]
A : \qquad a_n \; a_{n-1} \; \dots\dots\dots\dots a_i \dots\dots\dots\dots a_2 \; a_1 \\[4pt]
B : \qquad b_n \; b_{n-1} \; \dots\dots\dots\dots b_i \dots\dots\dots\dots b_2 \; b_1 \\[2pt]
\hline \\[-6pt]
S : \quad S_{n+1} \; S_n \; S_{n-1} \; \dots\dots\dots\dots S_i \dots\dots\dots\dots S_2 \; S_1
\end{array}
\right.
$$

(II) $\qquad S_i = \qquad a_i + b_i + R_i$

(III) $\qquad S_{n+1} = \qquad f(a_n, b_n, R_{n+1})$

(IV)

| | $y_0$ | $y_0$ | $y_1$ | $y_2$ | $y_3$ | : | Y |
| | | $x_0$ | $x_1$ | $x_2$ | | : | X |
| $x_2y_0$ / | $x_2y_0$ | $x_2y_0$ | $x_2y_1$ | $x_2y_2$ | $(x_2y_3)$ | : additionneur T1 |
| $x_1y_0$ | $x_1y_0$ | $x_1y_1$ | $x_1y_2$ | $x_1y_3$ | | |
| $s_5$ / | $s_5$ | $s_4$ | $s_3$ | $s_2$ | $(s_1)$ | $(x_2y_3)$ : additionneur T2 |
| $x_0y_0$ | $x_0y_0$ | $x_0y_1$ | $x_0y_2$ | $x_0y_3$ | | |
| $S_5$ | $S_4$ | $S_3$ | $S_2$ | $S_1$ | $(s_1)$ | $(x_2y_3)$ : additionneur T3 |

(V) $\qquad Sb = \overline{A + B + Ci} = \overline{a_i + b_i + R_i} = \overline{S_i}$

**A n n e x e** (suite)

$$
\begin{array}{rcccccl}
 & y_0 & y_1 & y_2 & y_3 & : & Y \\
 & x_0 & x_1 & x_2 & : & X \\
\hline
(\text{VI}) & x_2y_0/x_2y_0 & x_2y_1 & x_2y_2 & (x_2y_3) & : & \text{additionneur T1} \\
 & x_1y_0 \; x_1y_1 & x_1y_2 & x_1y_3 \\
\hline
 & s_5 \,/\, s_4 & s_3 & s_2 & (s_1) & (x_2y_3) & : & \text{additionneur T2} \\
 & x_0y_0 \; x_0y_1 & x_0y_2 & x_0y_3 \\
\hline
 & S_4 \; S_3 & S_2 & S_1 & (s_1) & (x_2y_3) & : & \text{additionneur T3}
\end{array}
$$

$$(\text{VII}) \qquad R_{n+1} = \text{Maj} \; (a_n, b_n, R_n)$$

$$(\text{VIII}) \qquad S_{n+1} = \text{Maj} \; (a_n, b_n, \overline{R_n})$$

$$(\text{IX}) \qquad U\text{-}V = \overline{\overline{U} + V}$$

## Revendications

1. Multiplieur, apte à effectuer la multiplication binaire poids faible en tête d'un multiplicande (Y) codé sur n bits avec un coefficient multiplicateur, caractérisé par le fait qu'il comprend des moyens de traitement (Ti) aptes pour chaque bit de la partie décimale du coefficient multiplicateur situés entre le bit de poids faible et le bit de poids fort, à calculer effectivement la somme de rang n+1 ($s_5$) obtenue à partir des produits partiels dudit bit considéré avec les n bits du multiplicande, et à partir des sommes correspondantes calculées pour le ou les bits précédents du coefficient multiplicateur, de façon à éviter un débordement interne du multiplieur.

2. Multiplieur selon la revendication 1, caractérisé par le fait que le coefficient multiplicateur est de module inférieur à 1, et par le fait que les moyens de traitement calculent ladite somme de rang n+1 pour chaque bit du coefficient multiplicateur situé entre le bit de poids faible et le bit de poids fort.

3. Multiplieur selon la revendication 1 ou 2, caractérisé par le fait que le multiplicande est de module inférieur à 1.

4. Multiplieur selon l'une des revendications 1 à 3, caractérisé par le fait qu'il est un multiplieur bit-série comportant une pluralité de tranches de multiplieur successives (T1, T2, T3) reliées en série, chaque tranche (Ti) étant susceptible de recevoir d'une part un bit prédéterminé du coefficient multiplicateur et d'autre part successivement tous les bits du multiplicande,
par le fait que les moyens de traitement comportent des moyens de traitement élémentaires respectivement incorporés au moins dans les tranches intermédiaires (T2) du multiplieur et aptes à calculer respectivement, pour le bit prédéterminé correspondant du coefficient multiplicateur, ladite somme de rang n+1.

5. Multiplieur selon l'une des revendications 1 à 4, caractérisé par le fait que au moins chaque tranche intermédiaire comporte des moyens de calcul (14, 16) des retenues successives associées aux sommes de rangs successifs,

et par le fait que chaque moyen de traitement élémentaire est apte à calculer la somme de rang n+1 correspondante à partir de la retenue complémentée de rang n.

6. Multiplieur selon la revendication 5, caractérisé par le fait que le moyen de calcul de chaque tranche comprend un additionneur (14) comportant une première entrée (A) apte à recevoir les produits partiels successifs du bit du coefficient multiplicateur associé à ladite tranche avec les bits du multiplicande, et une deuxième entrée (B) pour recevoir les sommes successives délivrées par la tranche précédente,

par le fait que ledit additionneur possède une première sortie de somme (Sb) apte à délivrer les sommes de rang inférieur ou égal à n,

et par le fait que chaque moyen de traitement élémentaire comprend ledit additionneur (14) qui possède en outre une deuxième sortie de somme apte à délivrer ladite somme de rang n+1, ainsi qu'un duplexeur (19) relié en entrée aux deux sorties de l'additionneur et en sortie à la sortie de la tranche de multiplieur, ce duplexeur étant commandé par un signal de commande dont l'occurrence est liée à celle d'un signal représentatif (SYN) du début ou de la fin du mot binaire du multiplicande.

7. Multiplieur selon la revendication 6, caractérisé par le fait que l'additionneur (14) comporte une sortie de retenue (COb) rebouclée sur une entrée de retenue (Ci) par l'intermédiaire d'un circuit de retard de retenue (16),

et par le fait que la deuxième sortie de somme est la sortie de retenue (COb).

8. Multiplieur selon la revendication 7, caractérisé par le fait que la première tranche (T1) du multiplieur comporte une entrée de synchronisation pour recevoir un mot de synchronisation (SYN) dont chaque changement d'état d'un bit correspond à l'arrivée du bit de poids fort ($y_0$) du multiplicande en entrée (E11) de la première tranche (T1) du multiplieur,

par le fait que chaque tranche de multiplieur comporte un circuit de retard de synchronisation (21) entre l'entrée (E3) et la sortie de synchronisation correspondante (O3i), la sortie de synchronisation d'une tranche étant reliée à l'entrée de synchronisation de la tranche suivante,

par le fait que la sortie de retenue (COb) et la première sortie de somme (Sb) de l'additionneur (14) sont complémentées,

par le fait que les moyens de traitement élémentaires de la tranche comportent, outre le circuit de retard (16) relié à la sortie complémentée de retenue (COb) :

- une porte logique OU EXCLUSIF (17) dont une entrée est reliée à la sortie du circuit de retard de retenue (16), dont l'autre entrée est reliée à l'entrée de synchronisation de la tranche, et dont la sortie est reliée à une entrée d'une porte logique ET (18) dont la sortie est reliée à l'entrée de retenue (Ci), et
- une porte logique NON OU EXCLUSIF (15), dont une entrée est reliée à la première sortie de somme complémentée (Sb) de l'additionneur (14), dont l'autre entrée est reliée à l'entrée de synchronisation (E3i) de la tranche, et dont la sortie est reliée à une entrée du duplexeur (19)

par le fait que l'autre entrée du duplexeur (19) est reliée à la sortie du circuit de retard de retenue (16), tandis que la sortie du duplexeur est reliée à la sortie de la tranche par un inverseur (20),

et par le fait que l'entrée de commande du duplexeur et l'autre entrée de la porte logique ET (18) sont reliées à la sortie du circuit de retard de synchronisation (21).

9. Multiplieur selon la revendication 6, caractérisé par le fait que l'additionneur (230) comporte une sortie de retenue (COb) rebouclée sur une entrée de retenue (Ci) par l'intermédiaire d'une circuit de retard de retenue, et par le fait que la deuxième sortie de somme (S1b) est distincte de la première sortie de somme (Sb) et de la sortie de retenue (COb).

10. Multiplieur selon la revendication 9, caractérisé par le fait que la première tranche du multiplieur comporte une entrée de synchronisation dont chaque changement d'état d'un bit correspond à l'arrivée du bit de poids faible ($y_3$) du multiplicande en entrée de la première tranche du multiplieur,

par le fait que chaque tranche du multiplieur comporte un circuit de retard de synchronisation (221) entre l'entrée et la sortie de synchronisation correspondante, la sortie de synchronisation d'une tranche étant reliée à l'entrée de synchronisation de la tranche suivante,

par le fait que les trois sorties (Sb, S1b, Cob) de l'additionneur (230) sont complémentées,

par le fait que les moyens de traitement élémentaires comportent un circuit de retard auxiliaire (232) disposé entre la deuxième sortie de somme (S1b) et l'entrée du duplexeur (219), l'autre entrée du duplexeur (219) étant reliée directement à la première sortie de somme (Sb), ainsi qu'une porte logique NON OU (231) dont la sortie est reliée à l'entrée de retenue de l'additionneur, et dont une entrée est reliée à la sortie du circuit de retard de retenue (216)

et par le fait que l'entrée de commande du duplexeur (219) et l'autre entrée de la porte NON OU (231) sont reliées à l'entrée de synchronisation de la tranche.

11. Multiplieur selon la revendication 9 ou 10, caractérisé par le fait que l'additionneur (230) comporte six transistors supplémentaires (233, 234, 235, 236, 237, 238) par rapport un additionneur ne comportant qu'une seule sortie de somme et une sortie de retenue, ces transistors supplémentaires étant répartis en trois paires auxiliaires de transistors complémentaires.

12. Multiplieur selon la revendication 11, caractérisé par le fait que la première paire auxiliaire (233, 234) est connectée en parallèle aux bornes d'une première paire de transistors complémentaires (239, 240) dont les grilles sont reliées à l'entrée de retenue (Ci) de l'additionneur et dont les sources communes sont reliées à la sortie de retenue (Cob), les sources communes de ces deux transistors (233, 234) de cette première paire auxiliaire étant reliées à la deuxième sortie de somme (S1b),

par le fait que les grilles des transistors (235, 236) de la deuxième paire auxiliaire sont reliées à une première entrée (A) de l'additionneur (230) tandis que les grilles des transistors (237, 238) de la troisième paire auxiliaire sont reliées à la deuxième entrée (B) de l'additionneur (230),

par le fait que la source de chaque transistor (235, 236) de la deuxième paire auxiliaire est connectée au drain du transistor homologue (237, 238) de la troisième paire auxiliaire, les sources des transistors de cette troisième paire auxiliaire étant reliées ensemble à la deuxième sortie de somme complémentée (S1b) de l'additionneur.

13. Multiplieur selon l'une des revendications 1 à 12, caractérisé par le fait que chaque tranche comporte un duplexeur (25) dont une entrée est apte à recevoir le bit correspondant du coefficient multiplicateur (X), et dont l'autre entrée est rebouclée sur la sortie du duplexeur par un circuit de retard (26),

par le fait que la sortie du duplexeur (25) est reliée à une entrée d'une porte logique ET (12) et par le fait que le duplexeur est commandé par un signal de commande (27) permettant de charger une fois pour toutes le bit correspondant du coefficient multiplicateur dans le circuit de retard (26).

14. Multiplieur selon l'une des revendications 1 à 13, caractérisé par le fait que la dernière tranche du multiplieur comporte un soustracteur réalisé à partir d'un additionneur tel que celui utilisé dans les tranches précédentes, dont la première sortie de somme n'est pas complémentée et dont la deuxième entrée (Bb) est complémentée.

15. Procédé pour empêcher un débordement interne d'un multiplieur, connecté sur un milieu de transmission de données, et apte à effectuer la multiplication binaire poids faible en tête d'un multiplicande (Y) codé sur n bits ($y_0$ $y_1$ $y_2$ $y_3$) avec un coefficient multiplicateur (X), caractérisé par le fait que, pour chaque bit de la partie décimale du coefficient multiplicateur (X) situé entre le bit de poids faible ($x_2$) et le bit de poids fort ($x_0$), on calcule effectivement dans le multiplieur (11), la somme ($s_5$) de rang n+1 obtenue à partir des produits partiels dudit bit considéré avec les n bits du multiplicande, et à partir des sommes correspondantes calculées pour le ou les bits précédents du coefficient multiplicateur.

16. Procédé selon la revendication 15, caractérisé par le fait que l'on fournit au multiplieur un coefficient multiplicateur de module inférieur à 1, et par le fait que l'on calcule ladite somme de rang n+1 pour chaque bit du coefficient multiplicateur situé entre le bit de poids fort et le bit de poids faible.

17. Procédé selon la revendication 15 ou 16, caractérisé par le fait que l'on fournit au multiplieur un multiplicande de module inférieur à 1.

18. Procédé selon la revendication 15 à 17, caractérisé par le fait que, pour chaque bit considéré du coefficient multiplicateur, on calcule la somme de rang n+1 à partir de la retenue complémentée de rang n.

19. Procédé selon l'une des revendications 15 à 18, caractérisé par le fait que l'on calcule simultanément ladite somme de rang n+1 et la somme de rang n.

# FIG.1

## ART ANTERIEUR

EP 0 625 745 A2

# FIG.2

## ART ANTERIEUR

# FIG.3

EP 0 625 745 A2

# FIG.4

# FIG.5

# FIG.6

Ti

X1    24                                    X2

0
25    26
1

VERS 28 (Ti+1)

27    28

12

DE E3i (FIG.4)                VERS 14 (FIG.4)

# FIG.7

FIG.8

EP 0 625 745 A2